# EUROPEAN PATENT SPECIFICATION

(11) **EP 0 472 572 B1**
(45) Date of publication and mention of the grant of the patent: **10.07.1996**
(21) Application number: 90907269.6
(22) Date of filing: 18.05.1990
(51) Int. Cl.: H04N 7/00

(54) **DATA TRANSMISSION IN THE ACTIVE PICTURE PERIOD**
DATENÜBERTRAGUNG IN DER AKTIVEN BILDDAUER
TRANSMISSION DE DONNEES PENDANT LA PERIODE ACTIVE DE L'IMAGE

(30) Priority: 18.05.1989 GB 8911493
(43) Date of publication of application: 04.03.1992
(73) Proprietor: DIGI-MEDIA VISION LIMITED, London E1 9XY (GB)
(72) Inventor: MORCOM, Richard Farley Cottage Upper High Street, Hampshire SO23 8UY (GB)
(74) Representative: Crawford, Andrew Birkby
(86) International application number: GB9000787
(87) International publication number: WO9014732

(56) References cited:
- EP-A- 0 168 104
- FR-A- 1 105 470
- GB-A- 2 140 242
- US-A- 4 257 065
- US-A- 4 354 202
- US-A- 4 463 376
- PROCEEDINGS OF THE NATIONAL COMMUNICATIONS FORUM. vol. 42, no. 2, 30 September 1988, OAK BROOK, ILLINOIS pages 1690 - 1694; MICHAEL A. ISNARDI ET AL.: "COMPATIBLE METHODS FOR ADVANCED TELEVISION BROADCAST"

## Description

The present invention relates to video systems in which data may be transmitted during the active picture period.

There are several sets of circumstances in which it is desirable to be able to transmit information along with a video signal. For example, when a new facilities are to be provided (e.g. high definition television, or increased aspect ratio images) for owners of new types of receiver but the television signal is still to be compatible with existing receivers the information required by the new receiver should accompany the information to be used in the conventional receiver. Also data transmission is often desirable for its own sake to allow teletext services and the like to be provided. Similarly, it can be useful to transmit control signals over air to a receiver so as to cause it to alter its operation, eg switch on or off.

In many cases the non-active picture period, i.e. the blanking intervals, of the television signal can be used for data transmission, as is the case for teletext transmission. However there are other occasions when this is not possible or is undesirable.

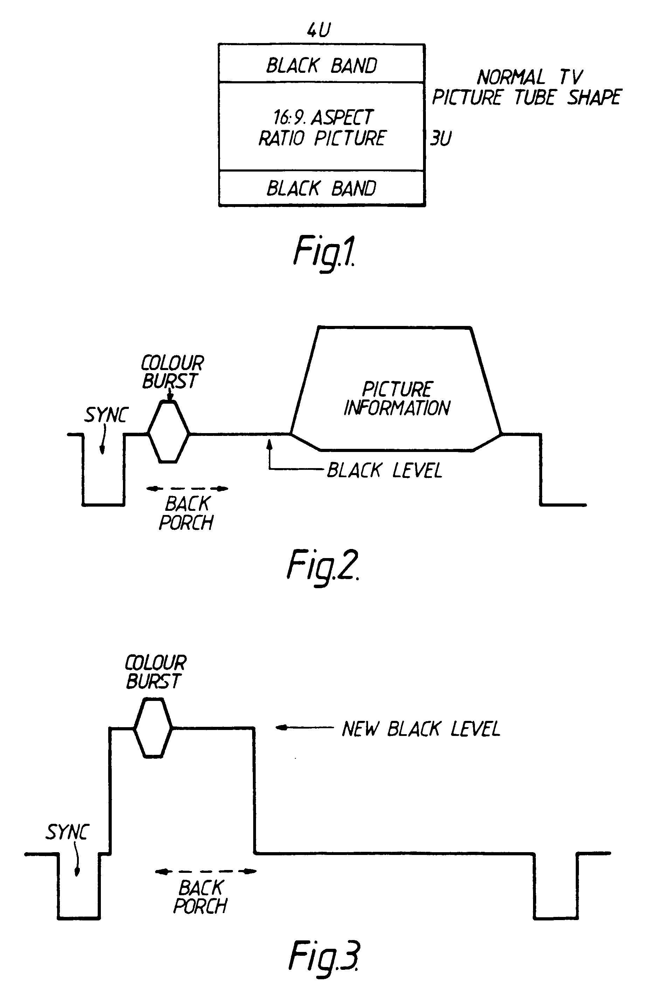

There have already been proposals to use the active picture period of a television signal for data transmission. In the field of increased aspect ratio television systems it has been suggested to transmit a television signal corresponding to a "letterbox" image on a conventional television receiver (i.e. an image with horizontal black bands above and below it as illustrated by Fig. 1) and to transmit the extra information required by the new wide-screen receiver during that part of the signal which corresponds to the horizontal black bands. However this prior proposal resulted in a visual disturbances in the black bands when reproduced on a conventional receiver display. The present invention relates to a television system of which enables a television signal corresponding to a "letterbox" image on a conventional receiver to be transmitted and additional information to be transmitted during the portions of the television signal representing the black bands, but where visual disturbance is reduced in, if not substantially absent from, the black bands when reproduced on a conventional receiver.

Substantially all of the major known television signals (PAL, SECAM, NTSC) include a reference voltage level representing "black" at a predetermined location in each line signal; vision information is then carried in the signal at voltages above the black level. Consequently if the desired additional information could be transmitted using voltages below the black level it would not produce visual effects in a conventional receiver. However the voltages below black level are already used in the known television signals, e.g. for sync transmission, and so additional information carried at such levels would be misinterpreted by a conventional receiver and would give rise to undesirable effects such as loss of proper synchronisation.

The present invention overcomes this problem by using an elevated black reference for lines of the active picture period which carry the additional information.

It is not essential for the additional information to be transmitted in the black bands of a letterbox image, instead it could be transmitted during the whole of the active picture period whilst a conventional receiver would show a black screen.

EP-A-0168104 discloses a multiplex television system adapted to transmit pictures having a 5/3 aspect ratio and in particular a system based on the MAC television standard. Additional information for widening the aspect ratio from the standard is transmitted along with the usual MAC signals and a receiver is sensitive to this to interpret the additional data as such and not as conventional picture signals. According to that system the receivers are provided with a device for adjusting the chrominance signal to zero level and the luminance signal to a black or grey level when it senses that additional data are being received instead of convention video signals.

EP-A-0357144, which was not published until after the priority date of the present patent (published on 07.03.90; Art 54(3) EPC), discloses a system for broadcasting additional information along with a conventional NTSC television signal. According to one embodiment in that document the system may be configured to such that the black level is altered at the beginning of lines in which data is present, in order to conceal that data from a conventional receiver.

The present invention provides a method for including additional information in the active picture period of a video signal, the method comprising the steps of:
a) generating an image signal having a black reference at a first level, BL;
b) generating an additional signal comprising said additional information for inclusion in the video signal;
c) providing the additional signal with a black reference at a level which, for at least some of the lines of the additional signal, is different from the first level BL; and
d) combining the image signal with the additional signal to form a video signal such that the additional signal is in the active picture period of the video signal; wherein
the additional signal is provided with a black reference having a level which varies from a first value, at or near the first level BL, for lines of the additional signal which in the video signal are closest to lines of the image signal, to a second value different from the first level BL, for lines of the additional information which in the video signal are further from lines of the image signal, the variation between the first and second values occurring over a number of lines of the additional signal, which number of lines substantially corresponds to the number of lines over which the sensed black reference level is integrated in the clamp circuits of the receivers.

The present invention also provides a method for including additional information in the active picture period of a video signal, the method comprising the steps of:
a) generating an image signal having a black reference at a first level, BL;
b) generating an additional signal comprising said additional information for inclusion in the video signal;
c) providing the additional signal with a black reference at a level which, for at least some of the lines of the additional signal, is different from the first level BL; and
d) combining the image signal with the additional signal to form a video signal such that the additional signal is in the active picture period of the 9ideo signal; wherein
the additional signal is provided with a black reference having a level which varies from a first value, at or near the first level BL, for lines of the additional signal which in the video signal are closest to lines of the image signal, to a second value different from the first level BL, for lines of the additional information which in the video signal are further from lines of the image signal, the variation between the first and second values being such that on reception of the video signal the response of the clamp circuits of receivers would be critically damped.

The present invention further provides apparatus for carrying out the methods described above, and apparatus for receiving and extracting the additional information from a transmitted signal produced according to the methods described above.

Features and advantages of the invention will become clear from the following description of embodiments thereof, given by way of example, and illustrated in the accompanying drawings, in which:
Fig. 1 shows in diagrammatic form the image produced on a conventional receiver by the signal produced according to the present invention;
Fig. 2 shows the waveform of a conventional PAL signal;
Fig. 3 shows the wave form of a PAL signal modified according to the present invention, without additional information inserted therein;
Fig. 4 shows a profile of the variation in clamp level over one field according to an embodiment of the invention;
Fig. 5 shows the waveform of a PAL signal modified according to the present invention, with additional information inserted;
Fig. 6 shows a profile of the variation in clamp level over one field according to a modification of the embodiment;
Fig. 7 shows a profile of the variation in clamp level over one field according to a further modification of the embodiment;
Fig. 8 shows in block diagrammatic form the structure of one embodiment of apparatus for generating a signal according to the invention; and
Fig. 9 shows in block diagrammatic form the structure of one embodiment of apparatus for receiving and extracting the additional data from a signal according to the invention, the apparatus depicted is an increased aspect ratio receiver.

In composite television signals (NTSC, PAL or SECAM) the black level is located in each active line between the line sync pulse and the video information, this is called the "back porch" (see Fig. 2). In the PAL system the transmitted black level is sensed at the receiver and integrated over about thirty lines of the received signal, the sampled level is then used as a reference black level for the picture ("the clamp").

In a PAL television system according to the present invention the clamp level is progressively increased from the usual position shown in Fig. 2 to that of Fig. 3 (towards peak white) commencing with the black lines immediately below the letterbox picture and reaching the much higher level by about thirty lines further on. At about the thirtieth line of black before the beginning of the next letterbox picture the elevated clamp level begins to be progressively reduced in the corresponding way back to the correct level for the picture.

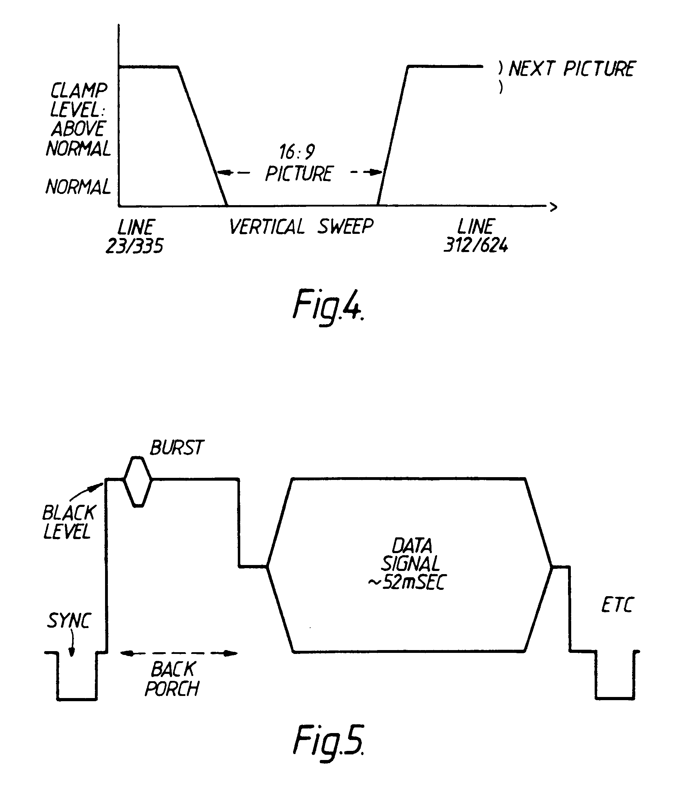

The gradual changes in black level are necessary in order that the existing receivers' clamp circuits react favourably to the new signal. The clamp "time constant" of several terms of lines is relevant in this respect. Fig. 4 shows the pattern of clamp level variation over one field according to this embodiment (which uses about seventy-two lines of black at the top and bottom of the letterbox picture displayed on a conventional receiver).

Having the clamp at a high level results in a much larger range of amplitudes below black being available for transmission of data or other information. In experiments it has been found that the clamp level may be increased by 0.5 to 0.7 volts (i.e. 70-100% of average picture level APL), this allows for data transmission without the need to use amplitudes reserved for sync.

The data can be transmitted in digital form (coded in the non return to zero format (NRZ) for example) or in analogue form (modulating a carrier signal). The modulated carrier signal has the advantage that it integrates to zero and is less likely to upset the sync detector, so large amplitudes can be used. An example of a line signal carrying the data is illustrated in Fig. 5.

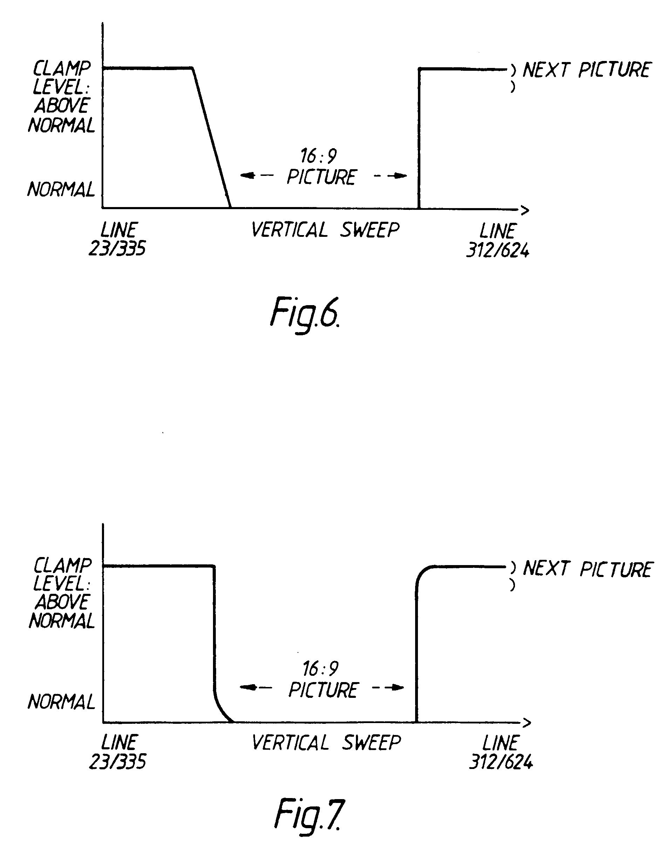

The progressive nature of the change in clamp level is designed to minimize disturbance of the clamps of the conventional domestic receiver so that a normal picture will be seen. However there are advantages in having a faster rate of change so that the highest clamp level can be maintained for as long as possible because in that way the amount of space in the "black band" part of the signal available for transmission of the extra data is maximized. Fig. 6 shows a modified clamp level profile adapted to take advantage of the conventional receiver's relative immunity to rapid increases in clamp level. Fig. 7 shows a further modified clamp level profile representing critical damping, i.e. a profile at which the response of a conventional receiver's clamp circuits will be critically damped (avoiding overshoot).

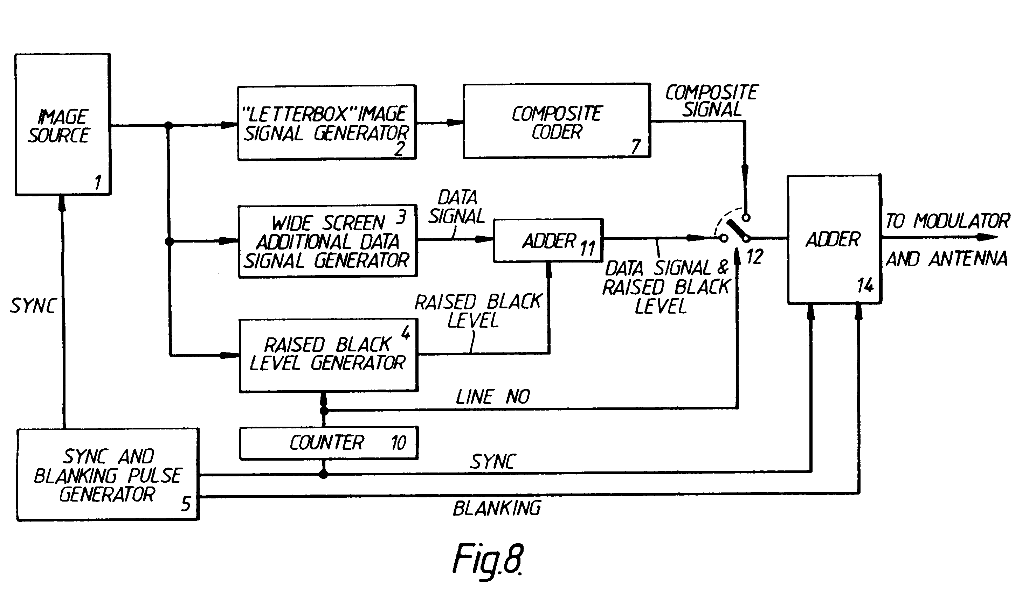

The general structure of one embodiment of apparatus for generating and transmitting a PAL television signal according to the invention is shown in block diagrammatic form in Fig. 8. In this embodiment the apparatus relates to an increased aspect ratio television system and the data signal is transmitted in analogue form, i.e. modulating the carrier signal.

Information from an image source 1 is fed to a "letterbox" image signal generator 2, a wide screen additional data generator 3 and a raised black level generator 4 under the control of a timing circuit, the sync and blanking pulse generator 5. The "letterbox" image signal generator 2 process the input image information so as to produce R, G, B signals corresponding to a "letterbox" image on a conventional PAL receiver. These signals are then processed as usual by a composite coder 7 to produce a composite chrominance and luminance signal representing the "letterbox" image. This signal includes the normal black level portion together with the colour burst (and PAL ident signal).

The wide screen additional data generator 3 processes the input information signal so as to produce additional up-conversion information.

A counter 10 receiving as inputs line and frame sync pulses from the sync and blanking pulse generator 5 generates an output signal corresponding to the line number (by counting up one for every input line sync pulse and resetting on every input frame sync pulse). This line number signal is received by the raised black level generator 4 which outputs an elevated blacked level signal during the lines corresponding to the black bands in the composite chrominance and luminance signal. The elevated black level is raised and lowered dependent upon line number as shown in e.g. Fig. 7.

The data signal and the raised black level are added in an adder 11 and the resulting signal is output. A switch 12 selectively connects the composite signal output from composite coder 7, or the data signal and raised black level output from the adder 11, to a further adder 14, dependent upon the value of the line number signal.

When the line number corresponds to the position of a black band then the data signal elevated black level are selected by switch 12 for output to the adder 14, and combination therein with the required sync and blanking pulses. The signal then output from the adder 14 is fed to a modulator and the data signal is there modulated onto a carrier.

When the line number corresponds to the position of lines in the letterbox image then the composite signal is selected by switch 12 for output to the adder 14 and combination therein with the sync and blanking pulses as usual. This resultant signal is fed to the modulator and modulated onto the carrier.

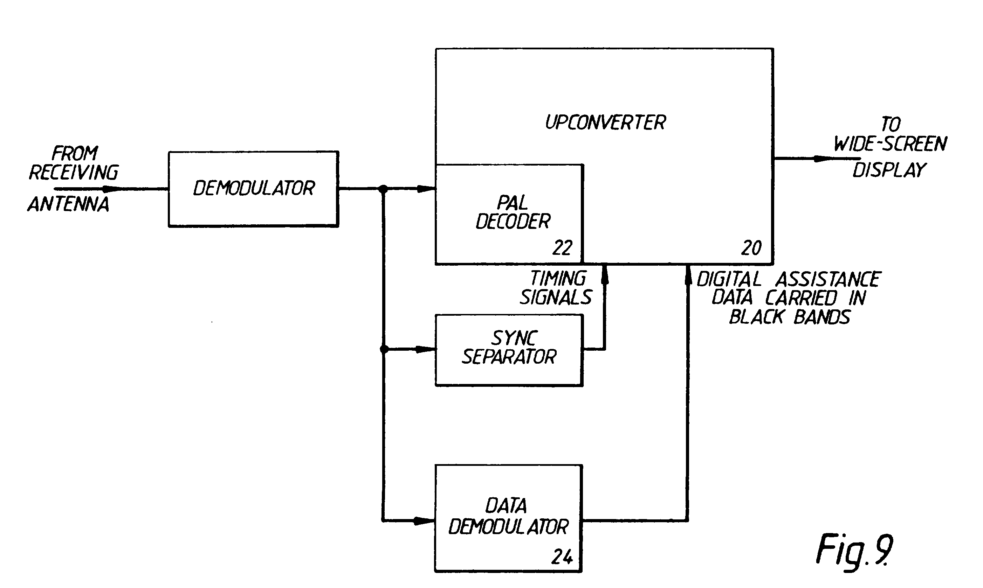

The general structure of one embodiment of apparatus for receiving and extracting the additional data from transmitted PAL signal according to the invention is shown in block diagrammatic form in Fig. 9. This receiver is a wide-screen receiver compatible with the transmitter of Fig. 8.

In the illustrated receiver an up-converter 20 is provided which comprises a PAL decoder 22. The decodes the signal portion corresponding to the letterbox image. A data demodulator 24 is also provided for extracting the additional data from the "black band" portion of the received signal. The additional data extracted by the data demodulator 24 is fed to the up-converter 20 where it is used together with the decoded composite signal to reconstruct a wide-screen image.

The present invention may be used in PAL, SECAM and NTSC television systems for many different applications where it is desired to transmit additional information of some sort along with the television signal. This information need not be solely data for processing by a receiver but equally could be control signals for causing the receiver to modify its operation. Accordingly there are a wide variety of possible receiver implementations.

Some receiver embodiments may be adapted both to respond to the new-style television signal according to the invention, by using the extra data transmitted during the active picture period, and to respond to conventional television signals. Such embodiments may include manually operable means for indicating to the receiver which type of signal is being received at any particular time.

Such embodiments may incorporate means for automatically distinguishing between the two types of received signal, such as a comparator device for comparing the black level in the lines of the received signal with a threshold indicative of the conventional black level (this threshold could be derived from the received signal itself by analysis of the modal value of black level). Alternatively, or additionally, the transmitted signal according to the invention may include a flag (in a convenient portion of the signal, e.g. in the video blanking portion) indicating that the signal has data transmitted in the active picture period, and the receiver can include a circuit for detecting and responding to this flag.

Although the invention has been explained above in terms of the creation of a letterbox image, or black screen, on a conventional receiver it is equally applicable to the situation where a letterbox image, or indeed a completely black screen, is to be created on a non-conventional receiver (e.g. a high definition receiver) and the data carried in the black area(s) is to be extracted and used by a different type of receiver (e.g. a wide screen, high definition receiver).

Furthermore according to the present invention it is possible to modify receivers of a given type so that while unmodified receivers display a letterbox image, or black screen, in response to the received signal and "do not notice" the additional information carried in the black areas, modified receivers extract the additional information and use it (either by processing it, if it is image or sound data, or by responding to it, if it comprises control signals).

This "modification" of receivers may take place during manufacture of the receivers (ie by making particular receivers in the modified form) or thereafter (ie by altering particular receivers, or by adding on a module for detecting and extracting the additional information carried in the black areas).

In some video signal transmission systems the video signal is transmitted in an inverted form. In such systems according to the invention the level of the black reference of the additional information in would appear in the transmitted signal to be lower, for some lines, than the first level, BL, of the image signal black reference.

## Claims

1. A method for including additional information in the active picture period of a video signal, the method comprising the steps of:
a) generating an image signal having a black reference at a first level, BL;
b) generating an additional signal comprising said additional information for inclusion in the video signal;
c) providing the additional signal with a black reference at a level which, for at least some of the lines of the additional signal, is different from the first level BL; and
d) combining the image signal with the additional signal to form a video signal such that the additional signal is in the active picture period of the video signal; wherein
the additional signal is provided with a black reference having a level which varies from a first value, at or near the first level BL, for lines of the additional signal which in the video signal are closest to lines of the image signal, to a second value different from the first level BL, for lines of the additional information which in the video signal are further from lines of the image signal, the variation between the first and second values occurring over a number of lines of the additional signal, which number of lines substantially corresponds to the number of lines over which the sensed black reference level is integrated in the clamp circuits of the receivers.

2. A method for including additional information in the active picture period of a video signal, the method comprising the steps of:
a) generating an image signal having a black reference at a first level, BL;
b) generating an additional signal comprising said additional information for inclusion in the video signal;
c) providing the additional signal with a black reference at a level which, for at least some of the lines of the additional signal, is different from the first level BL; and
d) combining the image signal with the additional signal to form a video signal such that the additional signal is in the active picture period of the video signal; wherein
the additional signal is provided with a black reference having a level which varies from a first value, at or near the first level BL, for lines of the additional signal which in the video signal are closest to lines of the image signal, to a second value different from the first level BL, for lines of the additional information which in the video signal are further from lines of the image signal, the variation between the first and second values being such that on reception of the video signal the response of the clamp circuits of receivers would be critically damped.

3. A method according to claim 1 or 2 in which said second value is greater than said first level, BL.

4. A method according to any previous claim, wherein the providing step c) is adapted to provide a black reference having a maximum level greater than the first level, BL, by an amount in the range 70% to 100% average picture level.

5. A method according to any previous claim, wherein the generating step b) is adapted to produce an analogue signal for modulating a carrier.

6. Apparatus for including additional information in the active picture period of a video signal, comprising:
means (1,2) for producing an image signal having a black reference at a first level, BL;
means (3) for generating an additional signal comprising said additional information for inclusion in the video signal;
means (4,11) for providing the additional signal with a black reference having a level which, for at least some of the lines of the additional signal, is different from the first level, BL; and
means (12) for combining the image signal with the additional signal to produce a video signal such that the additional signal is in the active picture period of the video signal;
wherein the providing means (4,11) and the combining means (12) are adapted for providing the additional signal with a black reference having a level varying from a first value, at or near the first level BL, for lines of the additional signal which in the video signal are closest to lines of the image signal, to a second value, different from the first level BL, for the lines of the additional signal which in the video signal are further from lines of the image signal, the variation between the first and second values occurring over a number of lines of the additional signal, which number of lines substantially corresponds to the number of lines over which the sensed black reference level is integrated in the clamp circuits of receivers.

7. Apparatus for including additional information in the active picture period of a video signal, comprising:
means (1,2) for producing an image signal having a black reference at a first level, BL;
means (3) for generating an additional signal comprising said additional information for inclusion in the video signal;
means (4,11) for providing the additional signal with a black reference having a level which, for at least some of the lines of the additional signal, is different from the first level, BL; and
means (12) for combining the image signal with the additional signal to produce a video signal such that the additional signal is in the active picture period of the video signal;
wherein the providing means (4,11) and the combining means (12) are adapted for providing the additional signal with a black reference having a level varying from a first value, at or near the first level BL, for lines of the additional signal which in the video signal are closest to lines of the image signal, to a second value, different from the first level BL, for the lines of the additional signal which in the video signal are further from lines of the image signal, the variation between the first and second values being such that on reception of the video signal the response of the clamp circuits of receivers is critically damped.

8. Apparatus according to claim 6 or 7 in which said second value is greater than said first level, BL.

9. Apparatus according to any one of claims 6 to 8, wherein the providing means (4,11) is adapted to provide a black reference having a maximum level greater than the first level, BL, by an account in the range 70% to 100% average picture level.

10. Apparatus according to any one of claim 6 to 9 wherein the generating means (3) is adapted to produce an analogue signal for modulating a carrier.

11. Apparatus according to any one of claim 6 to 10 wherein the combining means (12) comprises gate means receiving as inputs the image signal and the additional signal, wherein the gate means is adapted to selectively output the image signal or the additional signal depending on the output of a line counter (10).

12. Apparatus according to any one of claims 6 to 11, wherein the additional signal generating means (3) comprises means for generating wide screen image information which, in combination with the image signal may be used by a wide screen receiver to produce a wide screen image.

13. Apparatus according to any one of claim 6 to 12, wherein the additional signal generating means (3) is adapted to generate high definition image information which, in combination with the image signal, may be used by a high definition receiver to produce a high definition image.

14. Apparatus for receiving a video signal, the video signal comprising an image signal, and an additional signal in the active picture period of the video signal the black reference of the image signal having a first level, BL, and the black reference of the additional signal having a level, RBL, which, for at least some of the lines of the additional signal, is different from the first level BL, the apparatus comprising:
means responsive to the received video signal for determining whether or not lines of the received video signal have a black reference with a level different from the first level, BL; and
means responsive to the result of said determination for modifying the operation of the receiver, so as to make use of the additional signal portions of the received signal, wherein the determining means determines that a line of the received video signal has a black reference of level different from the first level, BL.

15. Receiving apparatus according to claim 14, wherein the determining means comprises means for detecting in the received video signal a flag indicative of the presence in the received signal of an additional signal having a black reference with a level, for at least some of the lines of the received signal, which is greater than said first level BL.

16. Receiving apparatus according to claim 14 or 17, wherein the determining means comprises a line counter responsive to the synchronisation signals present in the received video signal.

17. Receiving apparatus according to claim 14, wherein the determining means comprises means for sensing the level of the black reference of lines of the received video signal, for comparing the sensed level with a threshold level and outputting a signal indicative of the result of the comparison.

18. Receiving apparatus according to any one of claims 14 to 17, and comprising means responsive to the determining means for extracting said additional information from a line of the received video signal when the determining means determines that said line of the received video signal has a black reference at a level greater than the first level BL.

19. Receiving apparatus according to claim 18, and comprising means for using the image signal portion of the received television signal, in combination with the additional information extracted by said extracting means, for producing a modified image signal for display.

## Patentansprüche

1. Verfahren zum Einschließen zusätzlicher Information in die aktive Bildperiode eines Videosignals, wobei das Verfahren die Schritte umfaßt:
a) Erzeugen eines Bildsignals mit einer Schwarzreferenz bei einem ersten Pegel BL;
b) Erzeugen eines zusätzlichen Slgnals, das die zusätzliche Information zum Einschließen In das Videosignal umfaßt;
c) Versehen des zusätzlichen Signals mit einer Schwarzreferenz bei einem Pegel, der sich für wenigstens einige der Zeilen des zusätzlichen Signals von dem ersten Pegel BL unterscheidet, und
d) Kombinieren des Bildsignals mit dem zusätzlichen Signal, um ein Videosignal so zu bilden, daß sich das zusätzliche Signal in der aktiven Bildperiode des Videosignals befindet,
wobei das zusätzliche Signal mit einer Schwarzreferenz mit einem Pegel versehen ist, der sich von einem ersten Wert, bei oder nahe dem ersten Pegel BL, für Zeilen des zusätzlichen Signals, die in dem Videosignal Zeilen des Bildsignals am nächsten sind, auf einen zweiten von dem ersten Pegel BL abweichenden Wert für Zeilen der zusätzlichen Information, die in dem Videosignal weiter von Zeilen des Bildsignals entfernt sind, ändert, wobei die Veränderung zwischen dem ersten und zweiten Wert über eine Anzahl von Zeilen des zusätzlichen Signals auftritt, die im wesentlichen der Anzahl von Zeilen entspricht, über der der abgetastete Schwarzreferenzpegel in den Klemmschaltungen der Empfänger integriert wird.

2. Verfahren zum Einschließen zusätzlicher Information in die aktive Bildperiode eines Videosignals, wobei das Verfahren die Schritte umfaßt:
a) Erzeugen eines Bildsignals mit einer Schwarzreferenz bei einem ersten Pegel BL;
b) Erzeugen eines zusätzlichen Signals, das die zusätzliche Information zum Einschließen In das Videosignal umfaßt;
c) Versehen des zusätzlichen Signals mit einer Schwarzreferenz bei einem Pegel, der sich für wenigstens einige der Zeilen des zusätzlichen Signals von dem ersten Pegel BL unterscheidet, und
d) Kombinieren des Bildsignals mit dem zusätzlichen Signal, um ein Videosignal so zu bilden, daß sich das zusätzliche Signal In der aktiven Bildperiode des Videosignals befindet,
wobei das zusätzliche Signal mit einer Schwarzreferenz mit einem Pegel versehen ist, der sich von einem ersten Wert, bei oder nahe dem ersten Pegel BL, für Zeilen des zusätzlichen Signals, die in dem Videosignal Zeilen des Bildsignals am nächsten sind, auf einen zweiten von dem ersten Pegel BL abweichenden Wert für Zeilen der zusätzlichen Information, die in dem Videosignal weiter von Zeilen des Bildsignals entfernt sind, ändert, wobei die Veränderung zwischen dem ersten und zweiten Wert so ist, daß bei Empfang des Videosignals das Ansprechen der Klemmschaltungen von Empfängern kritisch gedämpft werden würde.

3. Verfahren nach Anspruch 1 oder 2, bei dem der zweite Wert größer als der erste Pegel BL ist.

4. Verfahren nach einem der vorangehenden Ansprüche, bei dem der versehende Schritt c) eingerichtet ist, eine Schwarzreferenz mit einem Maximalpegel bereitzustellen, der um einen Betrag im Bereich von 70% bis 100% des mittleren Bildpegels größer als der erste Pegel BL ist.

5. Verfahren nach einem der vorangehenden Ansprüche, bei dem der erzeugende Schritt b) eingerichtet ist, ein Analogsignal zum Modulieren eines Trägers zu erzeugen.

6. Vorrichtung zum Einschließen zusätzlicher Information in die aktive Bildperiode eines Videosignals, umfassend:
eine Einrichtung (1, 2), die ein Bildsignal mit einer Schwarzreferenz bei einem ersten Pegel BL erzeugt;
eine Einrichtung (3), die ein zusätzliches Signal erzeugt, das die zusätzliche Information zum Einschließen in das Videosignal umfaßt;
eine Einrichtung (4, 11), die das zusätzliche Signal mit einer Schwarzreferenz mit einem Pegel versieht, der sich für wenigstens einige der Zeilen des zusätzlichen Signals von dem ersten Pegel BL unterscheidet, und
eine Einrichtung (12), die das Bildsignal mit dem zusätzlichen Signal kombiniert, um ein Videosignal so zu erzeugen, daß sich das zusätzliche Signal in der aktiven Bildperiode des Videosignals befindet;
wobei die versehende Einrichtung (4, 11) und die kombinierende Einrichtung (12) eingerichtet sind, das zusätzliche Signal mit einer Schwarzreferenz mit einem Pegel zu versehen, der sich von einem ersten Wert, bei oder nahe dem ersten Pegel BL, für Zeilen des zusätzlichen Signals, die in dem Videosignal Zeilen des Bildsignals am nächsten sind, auf einen zweiten von dem ersten Pegel BL abweichenden Wert für die Zellen des zusätzlichen Signals, die in dem Videosignal weiter von Zeilen des Bildsignals entfernt sind, ändert, wobei die Veränderung zwischen dem ersten und zweiten Wert über eine Anzahl von Zeilen des zusätzlichen Signals auftritt, die im wesentlichen der Anzahl von Zeilen entspricht, über der der abgetastete Schwarz referenzpegel in den Klemmschaltungen von Empfängern integriert wird.

7. Vorrichtung zum Einschließen zusätzlicher Information In die aktive Bildperiode eines Videosignals, umfassend:
eine Einrichtung (1, 2), die ein Bildsignal mit einer Schwarzreferenz bei einem ersten Pegel BL erzeugt;
eine Einrichtung (3), die ein zusätzliches Signal erzeugt, das die zusätzliche Information zum Einschließen in das Videosignal umfaßt;
eine Einrichtung (4, 11), die das zusätzliche Signal mit einer Schwarzreferenz mit einem Pegel versieht, der sich für wenigstens einige der Zeilen des zusätzlichen Signals von dem ersten Pegel BL unterscheidet, und
eine Einrichtung (12), die das Bildsignal mit dem zusätzlichen Signal kombiniert, um ein Videosignal so zu erzeugen, daß sich das zusätzliche Signal in der aktiven Bildperiode des Videosignals befindet;
wobei die versehende Einrichtung (4, 11) und die kombinierende Einrichtung (12) eingerichtet sind, das zusätzliche Signal mit einer Schwarz referenz mit einem Pegel zu versehen, der sich von einem ersten Wert, bei oder nahe dem ersten Pegel BL, für Zeilen des zusätzlichen Signals, die in dem Videosignal Zeilen des Bildsignals am nächsten sind, auf einen zweiten von dem ersten Pegel BL abweichenden Wert für die Zeilen des zusätzlichen Signals, die in dem Videosignal weiter von Zeilen des Bildsignals entfernt sind, ändert, wobei die Veränderung zwischen dem ersten und zweiten Wert so ist, daß bei Empfang des Videosignals das Ansprechen der Klemmschaltungen von Empfängern kritisch gedämpft wird.

8. Vorrichtung nach Anspruch 6 oder 7, bei der der zweite Wert größer als der erste Pegel BL ist.

9. Vorrichtung nach einem der Ansprüche 6 bis 8, bei der die versehende Einrichtung (4, 11) eingerichtet ist, eine Schwarzreferenz mit einem Maximalpegel bereitzustellen, der um einen Betrag im Bereich von 70% bis 100% des mittleren Bildpegels größer als der erste Pegel BL ist.

10. Vorrichtung nach einem der Ansprüche 6 bis 9, bei der die erzeugende Einrichtung (3) eingerichtet ist, ein Analogsignal zum Modulieren eines Trägers zu erzeugen.

11. Vorrichtung nach einem der Ansprüche 6 bis 10, bei der die kombinierende Einrichtung (12) eine Toreinrichtung umaßt, die als Eingänge das Bildsignal und das zusätzliche Signal empfängt, wobei die Toreinrichtung eingerichtet ist, das Bildsignal oder das zusätzliche Signal abhängend vom Ausgang eines Zeilenzählers (10) selektiv auszugeben.

12. Vorrichtung nach einem der Ansprüche 6 bis 11, bei der die Zusatzsignal-Erzeugungseinrichtung (3) eine Einrichtung umfaßt, die Breitschirm-Information erzeugt, die in Verbindung mit dem Bildsignal durch einen Breitschirm-Empfänger benutzt werden kann, um ein Breitschirmbild zu erzeugen.

13. Vorrichtung nach einem der Ansprüche 6 bis 12, bei der die Zusatzsignal-Erzeugungseinrichtung (3) eingerichtet ist, Hochzeilen-Bildinformation zu erzeugen, die in Verbindung mit dem Bildsignal durch einen Hochzeilen-Empfänger benutzt werden kann, um ein Hochzeilenbild zu erzeugen.

14. Vorrichtung zum Empfangen eines Videosignals, wobei das Videosignal ein Bildsignal und ein zusätzliches Signal in aktiven Bildperiode des Videosignals umfaßt, die Schwarzreferenz des Bildsignals einen ersten Pegel BL aufweist und die Schwarzreferenz des zusätzlichen Signals einen Pegel RBL aufweist, der sich für wenigstens einige der Zellen des zusätzlichen Signals von dem ersten Pegel BL unterscheidet, wobei die Vorrichtung umfaßt:
eine Einrichtung, die auf das empfangene Videosignal anspricht und feststellt, ob Zeilen des empfangenen Videosignals eine Schwarzreferenz mit einem Pegel aufweisen, der sich von dem ersten Pegel BL unterscheidet, und
eine Einrichtung, die auf das Ergebnis der Feststellung anspricht und die Funktion des Empfängers abändert, um von den zusätzlichen Signalteilen des empfangenen Signals Gebrauch zu machen, wobei die Feststellungseinrichtung feststellt, daß eine Zeile des empfangenen Videosignals eine Schwarzreferenz mit einem Pegel aufweist, der sich von dem ersten Pegel BL unterscheidet.

15. Empfangsvorrichtung nach Anspruch 14, bei der die Feststellungseinrichtung eine Einrichtung umfaßt, die in dem empfangenen Videosignal ein Flag ermittelt, das in dem empfangenen Signal das Vorhandensein eines zusätzlichen Signals mit einer Schwarzreferenz mit einem Pegel anzeigt, der für wenigstens einige der Zeilen des empfangenen Signals größer als der erste Pegel BL ist.

16. Empfangsvorrichtung nach Anspruch 14 oder 15, bei der die Feststellungseinrichtung einen Zellenzähler umfaßt, der auf die in dem empfangenen Videosignal vorhandenen Synchronisationssignale anspricht.

17. Empfangsvorrichtung nach Anspruch 14, bei der die Feststellungseinrichtung eine Einrichtung umfaßt, die den Pegel der Schwarzreferenz von Zeilen des empfangenen Videosignals abtastet, um den abgetasteten Pegel mit einem Schwellenpegel zu vergleichen und ein Signal auszugeben, das das Ergebnis des Vergleichs anzeigt.

18. Empfangsvorrichtung nach einem der Ansprüche 14 bis 17 und umfassend eine Einrichtung, die auf die Feststellungseinrichtung anspricht und die zusätzliche Information aus einer Zeile des empfangenen Videosignals extrahiert, wenn die Feststellungseinrichtung feststellt, daß die Zeile des empfangenen Videosignals eine Schwarzreferenz bei einem Pegel aufweist, der größer als der erste Pegel BL ist.

19. Empfangsvorrichtung nach Anspruch 18 und umfassend eine Einrichtung, die den Bildsignalteil des empfangenen Fernsehsignals in Verbindung mit der durch die Extraktionseinrichtung extrahierten zusätzlichen Information benutzt, um ein modifiziertes Bildsignal zur Anzeige zu erzeugen.

## Revendications

1. Procédé pour inclure des informations supplémentaires dans la période d'image active d'un signal vidéo, le procédé comprenant les étapes de :
a) génération d'un signal d'image ayant une référence de noir à un premier niveau, BL ;
b) génération d'un signal supplémentaire comprenant lesdites informations supplémentaires à inclure dans le signal vidéo ;
c) fourniture du signal supplémentaire avec une référence de noir à un niveau qui, pour au moins certaines des lignes du signal supplémentaire, est différent du premier niveau BL ; et
d) combinaison du signal d'image au signal supplémentaire pour former un signal vidéo pour que le signal supplémentaire soit dans la période d'image active du signal vidéo ; dans lequel
le signal supplémentaire est pourvu d'une référence de noir ayant un niveau qui varie à partir d'une première valeur, à ou proche du premier niveau BL, pour des lignes du signal supplémentaire qui dans le signal vidéo sont plus proches des lignes du signal d'image, jusqu'à une seconde valeur différente du premier niveau BL, pour des lignes des informations supplémentaires qui dans le signal vidéo sont plus éloignées des lignes du signal d'image, la variation entre les première et seconde valeurs se produisant sur un nombre de lignes du signal supplémentaire, lequel nombre de lignes correspond substantiellement au nombre de lignes sur lequel le niveau de référence de noir détecté est intégré dans les circuits de fixation de niveau des récepteurs.

2. Procédé pour inclure des informations supplémentaires dans la période d'image active d'un signal vidéo, le procédé comprenant les étapes de :
a) génération d'un signal d'image ayant une référence de noir à un premier niveau, BL ;
b) génération d'un signal supplémentaire comprenant lesdites informations supplémentaires à inclure dans le signal vidéo ;
c) fourniture du signal supplémentaire avec une référence de noir à un niveau qui, pour au moins certaines des lignes du signal supplémentaire, est différent du premier niveau BL ; et
d) combinaison du signal d'image au signal supplémentaire pour former un signal vidéo pour que le signal supplémentaire soit dans la période d'image active du signal vidéo ; dans lequel
le signal supplémentaire est pourvu d'une référence de noir ayant un niveau qui varie à partir d'une première valeur, à ou proche du premier niveau BL, pour des lignes du signal supplémentaire qui dans le signal vidéo sont plus proches des lignes du signal d'image, jusqu'à une seconde valeur différente du premier niveau BL, pour des lignes des informations supplémentaires qui dans le signal vidéo sont plus éloignées des lignes du signal d'image, la variation entre les première et seconde valeurs étant telle que lors de la réception du signal vidéo la réponse des circuits de fixation de niveau serait amortie de façon critique.

3. Procédé selon la revendication 1 ou 2 dans lequel ladite seconde valeur est supérieure à ladite première valeur, BL.

4. Procédé selon une revendication précédente, dans lequel l'étape de fourniture c) est adaptée pour fournir une référence de noir ayant un niveau maximum supérieur au premier niveau BL, d'une quantité comprise dans l'intervalle de niveau moyen d'image de 70 à 100 %.

5. Procédé selon l'une quelconque des revendications précédentes, dans lequel l'étape de génération b) est adaptée pour produire un signal analogique pour moduler une porteuse.

6. Appareil pour inclure des informations supplémentaires dans la période d'image active d'un signal vidéo, comprenant :
un dispositif (1, 2) pour produire un signal d'image ayant une référence de noir à un premier niveau, BL ;
un dispositif (3) pour générer un signal supplémentaire comprenant lesdites informations supplémentaires à inclure dans le signal vidéo ;
un dispositif (4, 11) pour fournir le signal supplémentaire avec une référence de noir ayant un niveau qui, pour au moins certaines des lignes de signal supplémentaire, est différent du premier niveau, BL ; et
un dispositif (12) pour associer le signal d'image au signal supplémentaire pour produire un signal vidéo pour que le signal supplémentaire soit dans la période d'image active du signal vidéo ;
dans lequel le dispositif de fourniture (4, 11) et le dispositif de combinaison (12) sont adaptés pour fournir le signal supplémentaire avec une référence de noir ayant un niveau variant à partir d'une première valeur, à ou proche du premier niveau BL, pour des lignes du signal supplémentaire qui dans le signal vidéo sont plus proches des lignes du signal d'image, jusqu'à une seconde valeur, différent du premier niveau BL, pour des lignes du signal supplémentaire qui dans le signal vidéo sont éloignées des lignes du signal d'image, la variation entre les première et seconde valeurs se produisant au-dessus d'un nombre de lignes du signal supplémentaire, lequel nombre de lignes correspond substantiellement au nombre de lignes au-dessus duquel le niveau de référence de noir détecté est intégré dans le circuit de fixation de niveau des récepteurs.

7. Appareil pour inclure des informations supplémentaires dans la période d'image active d'un signal vidéo, comprenant :
un dispositif (1, 2) pour produire un signal d'image ayant une référence de noir à un premier niveau, BL ;
un dispositif (3) pour générer un signal supplémentaire comprenant lesdites informations supplémentaires à inclure dans le signal vidéo ;
un dispositif (4, 11) pour fournir le signal supplémentaire avec une référence de noir ayant un niveau qui, pour au moins certaines des lignes de signal supplémentaire, est différent du premier niveau, BL ; et
un dispositif (12) pour associer le signal d'image au signal supplémentaire pour produire un signal vidéo pour que le signal supplémentaire soit dans la période d'image active du signal vidéo ;
dans lequel le dispositif de fourniture (4, 11) et le dispositif de combinaison (12) sont adaptés pour fournir le signal supplémentaire avec une référence de noir ayant un niveau variant à partir d'une première valeur, à ou proche du premier niveau BL, pour des lignes du signal supplémentaire qui dans le signal vidéo sont plus proches des lignes du signal d'image, jusqu'à une seconde valeur, différent du premier niveau BL, pour des lignes du signal supplémentaire qui dans le signal vidéo sont éloignées des lignes du signal d'image, la variation entre les première et seconde valeurs étant telle que lors de la réception du signal vidéo la réponse des circuits de fixation de niveau des récepteurs est amortie de façon critique.

8. Appareil selon la revendication 1 ou 2 dans lequel ladite seconde valeur est supérieure à ladite première valeur, BL.

9. Appareil selon l'une quelconque des revendications 6 à 8, dans lequel le dispositif de fourniture (4, 11) est adapté pour fournir une référence de noir ayant un niveau maximum supérieur au premier niveau, BL, d'une quantité comprise dans l'intervalle de niveau moyen d'image de 70 à 100 %.

10. Appareil selon qu'une quelconque des revendications 6 à 9 dans lequel le dispositif de génération (3) est adapté pour produire un signal analogique pour moduler une porteuse.

11. Appareil selon l'une quelconque des revendications 6 à 10 dans lequel le dispositif de combinaison (12) comprend un dispositif de porte recevant comme entrées le signal d'image et le signal supplémentaire, dans lequel le dispositif de porte est adapté pour fournir sélectivement le signal d'image ou le signal supplémentaire en fonction de la sortie d'un compteur de ligne (10).

12. Appareil selon l'une des revendications 6 à 11, dans lequel le dispositif de génération de signal supplémentaire (3) comprend un dispositif pour générer une information d'image à écran large qui, en combinaison avec le signal d'image peut être utilisée par un récepteur à écran large pour produire une image d'écran large.

13. Appareil selon l'une quelconque des revendications 6 à 12, dans lequel le dispositif de génération de signal supplémentaire (3) est adapté pour générer des informations d'image de haute définition qui, en combinaison avec le signal d'image, peuvent être utilisées par un récepteur haute définition pour produire une image de haute définition.

14. Appareil pour recevoir un signal vidéo, le signal vidéo comprenant un signal d'image, et un signal supplémentaire dans la période d'image active du signal vidéo la référence de noir du signal d'image ayant un premier niveau BL, et la référence de noir du signal supplémentaire ayant un niveau, RBL, qui, pour au moins certaines des lignes de signal supplémentaire est différent du premier niveau BL, l'appareil comprenant :
un dispositif sensible au signal vidéo reçu pour déterminer si oui ou non des lignes du signal vidéo reçu ont une référence de noir avec un niveau différent du premier niveau, BL ; et
un dispositif sensible au résultat de ladite détermination pour modifier le fonctionnement du récepteur, afin d'utiliser les parties de signal supplémentaire du signal reçu, dans lequel le dispositif de détermination détermine qu'une ligne du signal vidéo reçu a une référence de noir de niveau différent du premier niveau, BL.

15. Appareil de réception selon la revendication 14, dans lequel le dispositif de détermination comprend un dispositif pour détecter dans le signal vidéo reçu un indicateur de la présence dans le signal reçu d'un signal supplémentaire ayant un niveau de noir avec un niveau, pour au moins certaines des lignes du signal reçu, qui est supérieur audit premier niveau BL.

16. Appareil de réception selon la revendication 14 ou 17, dans lequel le dispositif de détermination comprend un compteur de ligne sensible aux signaux de synchronisation présents dans le signal vidéo reçu.

17. Appareil de réception selon la revendication 14, dans lequel le dispositif de détermination comprend un dispositif pour détecter le niveau de référence de noir des lignes du signal vidéo reçu, pour comparer le niveau détecté à un niveau de seuil et pour fournir un signal indicateur du résultat de la comparaison.

18. Appareil de réception selon l'une quelconque des revendications 14 à 17, et comprenant un dispositif sensible au dispositif de détermination pour extraire lesdites informations supplémentaires d'une ligne du signal vidéo reçu lorsque le dispositif de détermination détermine que ladite ligne du signal vidéo reçu a une référence de noir à un niveau supérieur au premier niveau BL.

19. Appareil de réception selon la revendication 18, et comprenant un dispositif pour utiliser la partie de signal d'image du signal de télévision reçu, en combinaison avec les informations supplémentaires extraites par ledit dispositif d'extraction, pour produire un signal d'image modifié pour l'affichage.
